# EUROPEAN PATENT SPECIFICATION

(11) **EP 0 651 623 B1**
(45) Date of publication and mention of the grant of the patent: **25.06.1997**
(21) Application number: 93921173.6
(22) Date of filing: 20.07.1993
(51) Int. Cl.: A61C 7/02

(54) **TOOL FOR FASTENING ELASTIC RINGS TO BRACKETS IN ORTHODONTIA APPLICATIONS**
WERKZEUG ZUR BEFESTIGUNG VON ELASTISCHEN RINGEN AN DIE KLAMMERN BEI ORTHODONTISCHEN ANWENDUNGEN
OUTIL PERMETTANT DE FIXER LES BAGUES ELASTIQUES AUX ATTACHEMENTS, EN ORTHODONTIE

(30) Priority: 21.07.1992 KR 9213485
(43) Date of publication of application: 10.05.1995
(73) Proprietor: CHO, Kwang, Hyun, Diamondbar, CA 91765 (US)
(72) Inventor: CHO, Kwang, Hyun, Diamondbar, CA 91765 (US)
(74) Representative: Fiener, Josef
(86) International application number: US9306787
(87) International publication number: WO9407427

(56) References cited:
- US-A- 4 038 753
- US-A- 4 127 940
- US-A- 4 277 236
- US-A- 4 436 510
- US-A- 4 472 137

## Description

### BACKGROUND OF THE INVENTION

This invention relates to a tool for fastening elastic rings to brackets for orthodontic treatment.

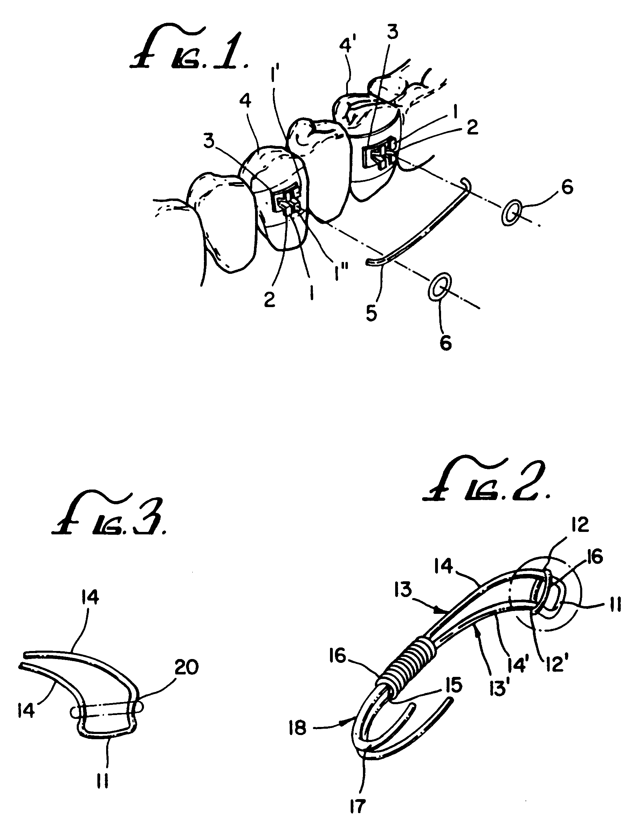

Prior art apparatus for the orthodontic treatment can be explained by reference to FIGS. 1, 5 and 6. First, the back plate (3) of a H-shaped bracket (1) having a groove (2) is attached to the center of the tooth for the treatment. An archwire (5) is then inserted to the grooves (2) of the brackets (1) which have been attached to two teeth (4)(4'). The elastic ring (6) is fastened to the upper and lower part (1')(1'') of the H-shaped bracket (1) to fix the archwire (5). Then, the both ends of the archwire (5) are bent to achieve the desired position of the teeth (4)(4').

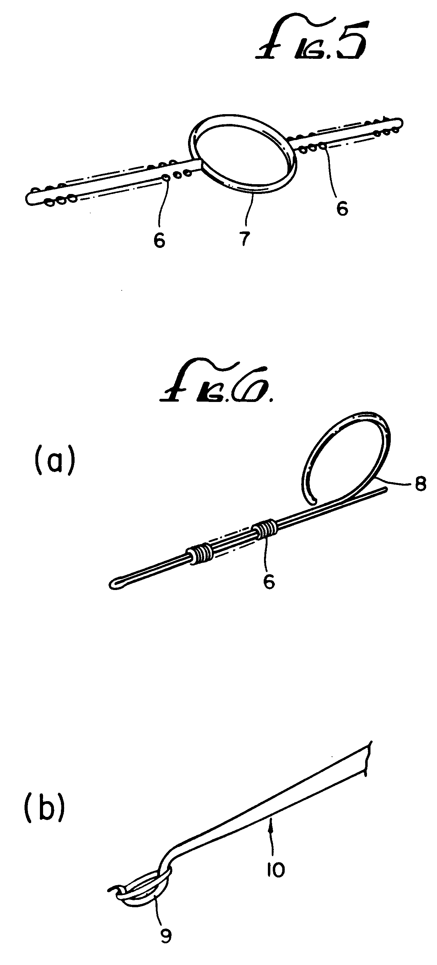

One of the traditional methods for fastening the elastic rings to the bracket can be explained by the FIG. 5. The elastic rings (6) are kept at the body of holder (7). Then, the elastic rings are separated one by one using a plier-type tool (not shown in the FIG. 5) and fastened to the upper and lower part (1')(1'') of the bracket (1). The other method is shown in FIGS. 6(a) and (b). In this method, a number of elastic rings (6) are kept at a wire holder (8) as in FIG. 6(a). Each elastic ring is separated from the wire holder using a tool (10) having a U-shaped curvature (9). The tool is shown in FIG. 6(b). (The procedure for fastening with this tool is the same as with the tool of the invention and will be described in details later).

In the method of FIG. 5, a plier-type tool is put into the ring and opened so that the expanded ring can be fastened to the upper and lower part (1')(1'') of the bracket (1). Therefore, the plier-type tool needs to be positioned perpendicular to the teeth (4)(4'). Thus, in case of a molar tooth, the mouth of a patient is forced to be opened wide to the side. This disadvantage also applies to the orthodontic instrument disclosed in US-A-4,277,236 being additionally rather complicated.

Furthermore, in the method of FIG. 6(a) and (b), the procedure to separate an elastic ring (6) from the wire holder and to place at the bent portion (9) of the tool (10) is not trivial. Due to the elasticity of the ring (6), a number of elastic rings are often wasted during this procedure.

Therefore, it is an object of the invention to provide a tool for fastening elastic rings to brackets for orthodontic treatment solving the above-identified problem.

### SUMMARY OF THE INVENTION

This object is achieved by a tool according to claim 1.

The tool of the invention eliminates the need of a separate holder because the elastic rings are kept at the rear end of the tool. When needed, an elastic ring can be pushed towards the head of the tool and placed easily at the indented or concave portion of the head.

This tool also prevents undesired waste of the rings as in the method of FIG. 6.

### BRIEF DESCRIPTION OF THE DRAWINGS

The accompanying drawings illustrate the invention. In such drawings:
FIG. 1 shows brackets attached to teeth;
FIG. 2 shows a tool for fastening of this application;
FIG. 3 shows an alternative design of a tool;
FIG. 4 shows the procedure for fastening;
FIG. 5 shows one of the conventional holders to hold the elastic rings;
FIG. 6(a) shows another conventional holder to hold the elastic rings; and
FIG. 6(b) shows a conventional tool for fastening the elastic rings for the holder in FIG. 6(a).

### DETAILED DESCRIPTION OF THE PREFERRED EMBODIMENT

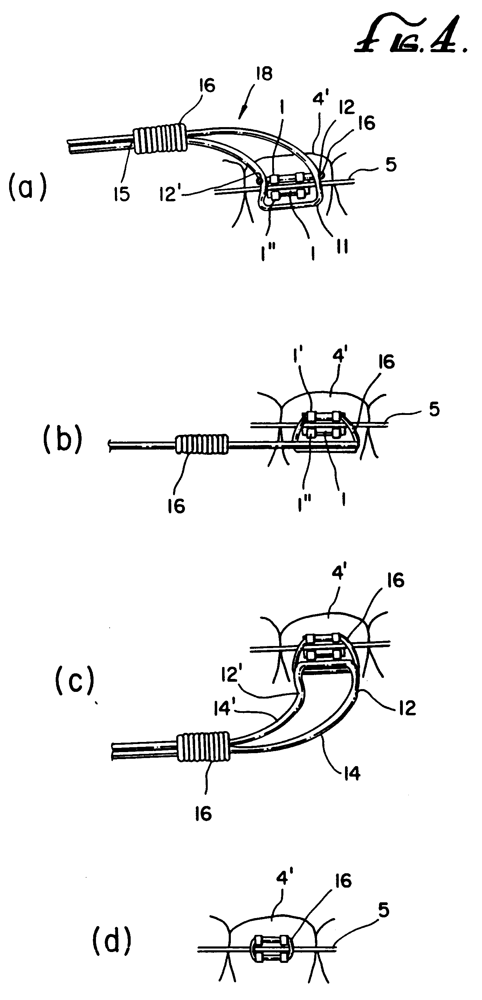

The preferred embodiment of the tool (18) and procedure for fastening an elastic ring (16) to the bracket (1) will be described in details by the FIGS. 2, 3, and 4.

The center of a wire is bent to form a U-shaped head (11) of the tool (18). The indented portion (12)(12') of the head (11) is also made for the placement of the elastic ring (16) at the head (11). Side bars (13)(13') of the wire are made to form slanted portions (14)(14') of the tool (18). A number of elastic rings (16) are held where the two wire side bars (13)(13') are met together (15). The ends (17) of the wire side bars (13)(13') are bent to keep the elastic rings (16). Thus, a tool (18) for fastening the elastic ring (16) to the bracket (1) is achieved. During the treatment, an elastic ring (16) is gradually expanded as moving towards the slanted portions (14)(14') of the head (11) of the tool (18). When reached at the indented portion (12)(12') of the head (11), it is slightly shrunk and fixed at that portion (12)(12').

After an elastic ring (16) is placed at the indented portion of the head (11), the inner portion of the elastic ring (16) is inserted to the upper part (1') of the bracket (1) as shown in FIG. 4(a). The ring (16) is then expanded by rotating the tool (18) by 90 degrees as in FIG. 4(b). When rotated 180 degrees as in FIG. 4(c), the elastic ring (16) is separated from the tool (18) and then inserted into the lower part (1'') of the bracket (1) as in FIG. 4(d). Finally, the elastic ring (16) fixes the position of the archwire (5) inserted to the grooves (2).

An alternative design of the tool (18) is shown in FIG. 3. Instead of the indented portion (12) of the head (11), a concave portion (20) is formed at the head (11) of the tool (18). With this alternative design, it is not necessary to fix the position of the elastic ring (16) at the head (11) of the tool (18).

## Claims

1. A tool (18) for fastening an elastic ring (16) to a bracket (1) for orthodontic treatment, the tool (18) consisting of:
(a) a U-shaped head (11) made by bending a center of a wire,
(b) an indented portion (12)(12') at the head (11) to fix the position of the elastic ring (16),
(c) side bars (13)(13') gradually narrowing down to form slanted portions (14)(14'),
(d) a portion of the two wire side bars (13)(13') meeting together (15) to hold a number of elastic rings (16), and
(e) ends (17) of the two wire side bars (13)(13') being bent to keep the elastic rings (16) inside the tool (18).

2. The tool according to claim 1, wherein a concave portion (20) is formed at the head (11) of the tool (18) instead of the indented portion (12)(12').

## Patentansprüche

1. Werkzeug (18) zur Befestigung eines elastischen Ringes (16) an einer Klammer (1) zur kieferorthopädischen Behandlung, bestehend aus:
(a) einem durch Umbiegen eines Drahtes in der Mitte hergestellten U-förmigen Kopf (11),
(b) einem eingekerbten Abschnitt (12)(12') an dem Kopf (11) zur Fixierung der Position des elastischen Ringes (16),
(c) sich nach unten allmählich verengenden Seitenstegen (13)(13') zur Bildung von Schrägabschnitten (14)(14'),
(d) einem Verbindungsstellenabschnitt (15) der zwei Draht-Seitenstege (13)(13') zum Halten einer Anzahl von elastischen Ringen (16), und
(e) umgebogenen Enden (17) der zwei Draht-Seitenstege (13)(13') zum Halten der elastischen Ringe (16) innerhalb des Werkzeugs (18).

2. Werkzeug nach Anspruch 1, wobei am Kopf (11) des Werkzeugs (18) anstelle des eingekerbten Abschnitts (12)(12') ein konkaver Abschnitt (20) ausgebildet ist.

## Revendications

1. Outil (18) destiné à fixer un bracelet élastique (16) à une attache (1) pour traitement orthodontique, l'outil (18) étant constitué par :
(a) une tête (11) en forme de U formée en cintrant le milieu d'un fil,
(b) une partie encochée (12) (12') prévue sur la tête (11) pour fixer la position du bracelet élastique (16),
(c) des barres latérales (13) (13') gui se resserrent progressivement pour former des parties obliques (14) (14'),
(d) une portion des deux barres latérales (13) (13') en fil se rejoignant en (15) pour tenir plusieurs bracelets élastiques (16), et
(e) des extrémités (17) des deux barres latérales en fil (13) (13') étant recourbées pour maintenir les bracelets élastiques (16) à l'intérieur de l'outil (18).

2. Outil selon la revendication 1, dans un lequel une portion concave (20) est formée à la tête (11) de l'outil (18) en remplacement d'une partie encochée (12) (12').
